(19) Europäisches Patentamt
European Patent Office
Office européen des brevets

(11) Publication number: **0 355 521 B1**

# (12) EUROPEAN PATENT SPECIFICATION

(45) Date of publication of patent specification: **27.07.94**

(51) Int. Cl.5: **C09C 1/00**, D21H 19/38, D21H 17/67, C09C 3/00

(21) Application number: **89114366.1**

(22) Date of filing: **03.08.89**

## (54) Composite pigments or fillers and methods for the preparation of same.

(30) Priority: **05.08.88 US 228584**

(43) Date of publication of application:
**28.02.90 Bulletin 90/09**

(45) Publication of the grant of the patent:
**27.07.94 Bulletin 94/30**

(84) Designated Contracting States:
**AT BE CH DE ES FR GB GR IT LI LU NL SE**

(56) References cited:
**EP-A- 0 129 960**
**EP-A- 0 191 242**
**WO-A-87/00544**
**DE-A- 2 622 902**

(73) Proprietor: **J.M. HUBER CORPORATION**
**Brown's Dock & Navesink River Roads**
**Locust, NJ 07760(US)**

(72) Inventor: **Wason, Satish K.**
**2208 Lyn's Court**
**Bel Aire Maryland 21018(US)**
Inventor: **Withiam, Michael C.**
**148 Kircaldy Drive**
**Elkton Maryland 21921(US)**

(74) Representative: **Diehl, Hermann O. Th., Dr. et al**
**Diehl & Glaeser, Hiltl & Partner**
**Patentanwälte**
**Postfach 19 03 65**
**D-80603 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 355 521 B1

## Description

This invention relates to a composite product, methods for preparation and use of same.

It is well known in the art to use various types of minerals as paper coating and filler pigments. In particular, sodium aluminosilicates are well known as paper fillers, as are various forms of clay such as kaolin. It is also known in the art to modify minerals by application of surface coatings of various inorganic compositions. Thus, U. S. Patent 3,849,149 to Swift et al, 1974, discloses a method of modifying the surface properties of particulate mineral materials by forming on the surface of the particles a coating which has a significant number of acidic sites. According to this patent, the surface of certain natural aluminosilicate minerals including kaolin and bentonite can be modified to give an enhanced acidic reaction by a procedure involving heat treatment. This patent also discloses that the surfaces of such clay mineral particles can be provided with acidic coatings to achieve reproducibly a variety of acidic surfaces. This patent discloses a pigment or filler material consisting of a particulate mineral such as kaolin or bentonite having a surface coating which has a significant number of acidic sites which have PKA values of less than 2.8. A main object of this patent is to place the acidic surface coatings on the mineral so that additional coatings of organic materials such as silanes can be applied to the mineral.

U.S. Patents 4,026,721, 4,072,537, and 4,117,191 to Kurrle, disclose a composite silicate pigment for use in paper prepared by a precipitation reaction wherein spherical, hydrous metal silicate particles are precipitated on the planar surfaces of clay particles which have a platelet type structure. This composite pigment in the specific embodiment of these patents is a kaolin clay component having a platelet type structure with a planar surface and having a metal silicate component in the form of spherical particles of an alkaline earth metal silicate precipitated on the planar surfaces of the clay platelets. According to this patent, when incorporated into paper, the metal silicate particles act as spacers between individual clay particles to create additional air interfaces on sheet drying.

In published PCT Application No. WO 87/07884, published December 30, 1987, of this assignee, there are disclosed compositions which may be used as paper pigments which comprise reaction products of kaolin with an alkali metal silicate or similar reactant. In these compositions, there is produced an altered kaolin nucleus which has a rim, edge or border which comprises the reaction product of the kaolin and the alkali metal silicate or similar reactant. Thus this product is not a composite pigment but rather is the reaction product of the kaolin with the alkali metal silicate or similar reactant.

It is the object of the present invention to provide improved composite products and methods for producing same. This object is solved by the products according to independent claims 1 and 2 and the methods of claims 10 to 12.

According to a first aspect, the invention provides a composite product comprising an inert mineral nucleus coated with an active paper pigment, wherein the mineral nucleus is selected from the group consisting of kaolins, leached clays, talcs, micas, serpertinite, montmorillonites, hydrated alumina, calcium carbonate, magnesium carbonate, ground limestone, diatomaceous earth, and mixtures thereof; the coating consists of a continuous uniform coating of discreet particles of an active paper pigment selected from the group consisting of synthetic alkali metal silicates, alkali metal aluminosilicates, alkaline earth metal silicates, alkaline earth metal aluminosilicates, precipitated silicas, alkaline earth alumino carbonates and mixtures thereof, which composite product is obtainable by

(a) forming an aqueous media containing reagents necessary to form said active paper pigment;

(b) forming an aqueous slurry of said mineral nucleus;

(c) providing an agitated reactor vessel for receipt of said reagents;

(d) adding a sufficient amount of reagents necessary to form said active paper pigment to said reactor vessel so as to form at least a portion of said active paper pigment;

(e) adding said slurry of mineral nucleus;

(f) continuing the simultaneous addition of the major portion of said active paper pigment reagents and said aqueous slurry of said mineral nucleus under alkaline reaction conditions at temperatures ranging from 40 to 100 °C until all reagents are added to the mixture; and

(g) recovering the solid composite product.

According to a further aspect, the invention provides a composite product comprising an inert mineral nucleus encapsulated with a continuous uniform coating of an active paper pigment, wherein the mineral nucleus is selected from the group consisting of kaolins, leached clays, talcs, micas, serpertinite, montmorillonites, hydrated alumina, calcium carbonate, magnesium carbonate, ground limestone, diatomaceous earth, and mixtures thereof; the coating consists of a continuous uniform coating of discreet particles of an active paper pigment selected from the group consisting of synthetic alkali metal silicates, alkali metal aluminosilicates, alkaline earth metal silicates, alkaline earth metal aluminosilicates, precipitated silicas, alkaline earth alumino carbonates and mixtures thereof, which composite product is obtainable by

(a) forming an aqueous media containing reagents necessary to form said active paper pigment;
(b) forming an aqueous slurry of said mineral nucleus;
(c) providing an agitated reactor vessel for receipt of said reagents;
(d) adding a sufficient amount of reagents necessary to form said active paper pigment to said reactor vessel so as to form at least a portion of said active paper pigment;
(e) adding said slurry of mineral nucleus;
(f) continuing the simultaneous addition of the major portion of said active paper pigment reagents and said aqueous slurry of said mineral nucleus under alkaline reaction conditions at temperatures ranging from 40 to 100 °C until all reagents are added to the mixture; and
(g) recovering the solid composite product.

Further advantageous features of the above products are evident from the dependent product claims.

The invention further provides a method for the preparation of a composite product according to one of claims 1 to 7, said method comprising the steps of:

(a) forming aqueous media containing reagents necessary to form said active paper pigment;
(b) forming an aqueous slurry of said mineral nucleus;
(c) providing an agitated reactor vessel for receipt of said reagents;
(d) adding a sufficient amount of reagents necessary to form said active paper pigment to said reactor vessel so as to form at least a portion of said active paper pigment;
(e) adding said slurry of mineral nucleus;
(f) continuing the simultaneous addition of the major portion of said active paper pigment reagents and said aqueous slurry of said mineral nucleus under alkaline reaction conditions at temperatures ranging from about 40 to 100 °C until all reagents are added to the mixture; and
(g) recovering the solid composite product.

Additionally, a method for the preparation of a composite product of claim 8 is provided which comprises the steps of

(a) forming aqueous solutions of sodium silicate and aluminum sulphate;
(b) forming aqueous slurries of magnesium hydroxide and kaolin clay;
(c) adding at least a portion of said aluminum sulphate solution and said magnesium hydroxide slurry to an agitated reactor vessel;
(d) beginning the addition of said sodium silicate solution in a sufficient amount to form at least sodium magnesium aluminosilicate;
(e) adding said kaolin slurry;
(f) continuing the simultaneous addition of all of said reagents until each reagent has been added to said agitator reactor, the addition of the reagents to the reactor being carried out under conditions of a temperature of 40-100 °C and an alkaline pH;
(g) thereafter continuing the addition of sodium silicate solution until a final pH of 8.0 to 10.0 is obtained; and
(h) recovering the formed solid composite product.

Furthermore, the invention provides a method for the preparation of a composite product of claim 9 which comprises the steps of

(a) forming aqueous solutions of alkali metal silicate and aluminum sulphate;
(b) forming aqueous slurries of magnesium hydroxide and kaolinite;
(c) adding at least a portion of said aluminum sulphate solution and said magnesium hydroxide slurry to an agitated reactor vessel;
(d) beginning the addition of said alkali metal silicate solution in a sufficient amount to form at least alkali metal magnesium aluminosilicate;
(e) adding said kaolinite slurry;
(f) continuing the simultaneous addition of all of said reagents until each reagent has been added to said agitator reactor, the addition of the reagents to the reactor being carried out under conditions of a temperature of 40-100 °C and an alkaline pH;
(g) thereafter continuing the addition of alkali metal silicate solution until a final pH of 8.0 to 10.0 is obtained; and
(h) recovering the formed solid composite product.

Further advantageous features of the methods are evident from the dependent method claims.

The present invention also provides use of these improved composite products which are distinct from the above prior art compositions, as a paper pigment, coating pigment and filler, the paper pigments being precipitated encapsulated paper pigments.

Other aspects, objects and advantages of the present invention will become apparent as the description thereof proceeds.

Reference is now made to the drawings accompanying the application wherein:

Figure 1 is an SEM photomicrograph magnified 10,000 times of a milled product produced according to a specific embodiment of the invention;

Figure 2 is an SEM photomicrograph magnified 10,000 times of a commercial kaolin clay product, Hydrasperse®, which can be used as a starting material in preparation of the products of the invention;

Figure 3 is a physical mixture of an active commercial modified alkali metal alumino silicate paper pigment, and the Hydrasperse® kaolin clay of Figure 2 magnified 10,000 times;

Figure 4 is a process flow diagram for preparation of a product according to a specific embodiment of the invention;

Figures 5A-5I are SEM photomicrographs at 10,000X magnification showing a timed sequence of the appearance of products of a specific embodiment according to the present invention;

Figures 6A-6C are SEM photomicrographs of products produced according to Example 1 of Kurrle U.S. Patent No. 4,026,721;

Figures 7A-7C are SEM photomicrographs of 10,000X magnification of products produced according to Example 2 of Kurrle U.S. Patent 4,026,721;

Figure 8 is a paper performance comparison of the product of Example 1 of U.S: Patent 4,026,721 of Kurrle compared to the product of the present invention; and

Figure 9 is a paper performance comparison of an alumina analog of a product of U.S. Patent 4,026,721 of Kurrle, Example 1.

The coating of the products according to the present invention is substantially uniform and preferably encases at least 80% and more preferably up to 100% of the mineral nucleus. The thickness of the coating may e.g. range from 0.3 $\mu$m to 1.0 $\mu$m.

The composite products of the present invention provide paper enhancement characteristics equivalent to or better than conventional paper pigments even though the major portion of the product is not a paper pigment. Thus, the composite product of the invention achieves all the advantages of an active paper pigment at substantially lower cost because a substantial portion of the product is a material not conventionally used as a paper pigment.

The products of the present invention exhibit an unexpected increase in performance as paper fillers and paper coatings over the average performance which one would expect from the individual components or a physical blend. Thus, it has been found that the TAPPI opacity is increased over comparative measurements for either the mineral nucleus or the active paper pigment measured under the same conditions. Similarly, brightness of paper is increased by the product of the present invention as compared with the mineral nucleus. Moreover, the product of the present invention exhibits improved values over a physical blend of the mineral nucleus and the active paper pigment.

On a weight basis, the product of the present invention will contain from 10% to 90% of the active paper pigment to 90% to 10% of the mineral nucleus. With respect to opacity, the preferred amount of active paper pigment contained in the composition should range from about 25 to 75% by weight with the mineral nucleus comprising from about 75 to 25% by weight. With respect to brightness, it is preferred that the active paper pigment comprise from about 75 to 95% by weight with the amount of mineral nucleus comprising from about 5% to 25% by weight.

According to the method of the present invention, an agitated reactor is provided to which the reactants required for forming the product are added simultaneously over a short period of time. The product is prepared under alkaline conditions and the active paper pigment under in situ conditions in the presence of the mineral nucleus.

It is generally preferred to initially begin addition of the reactants necessary to form the active paper pigment until formation of the active paper pigment actually begins. At that point, a slurry of the mineral nucleus material is added to the agitated reactor either all at once or slowly. Thereafter, the remaining reactants are continued to be added under alkaline conditions until all reactants are added and the reaction is completed. The resulting composite product is then recovered, preferably washed to remove impurities such as soluble salts and the product recovered. Milling of the product and possibly spray drying may also be carried out to form the final product.

In this reaction for preparation of the product, it is preferred to conduct the reaction so as to provide a steady and gradual increase in reaction pH until the reaction is completed. The reaction in the presence of the mineral nucleus is operated at a pH of above 7.0 and preferably at a pH in the range of about 8.0 to 9.0. The final pH for the reactions may range up to 10.0, depending on the reaction and use of the final product. The temperature of the reaction ranges from 40 °C to 100 °C and preferably from about 50 °C to 75 °C. The reaction may be carried out under batch conditions, usually at atmospheric pressure.

In formation of the products of the present invention, the mineral nucleus is substantially inert and is a mineral, that is selected from the group consisting of kaolins, leached clays, talcs, micas, serpertinite, montmorillanites, hydrated alumina, calcium carbonate, preferably precipitated calcium carbonate (PCC), ground limestone, preferably ultrafine ground limestone (UFGL), magnesium carbonate, diatomaceous earth and mixtures thereof. A commercially available acid leached clay is Essellar®, from J. M. Huber Corporation.

The coating to be applied to the mineral forms a uniform and continuous coating so as to substantially encapsulate the mineral.

The active paper pigment is selected from a group consisting of synthetic alkali metal silicates, alkali metal aluminosilicates, preferably synthetic alkali metal aluminosilicates, alkaline earth metal silicates, preferably synthetic alkaline earth metal silicates, alkaline earth metal aluminosilicates, preferably synthetic alkaline earth metal aluminosilicates, precipitated silicas, alkaline earth aluminocarbonates, and mixtures thereof.

Within these groups of reactants, certain combinations are particularly useful and the following Table 1 shows a matrix of illustrations of useful and preferred combinations within the scope of the invention.

TABLE 1

Matrix

Illustration of Useful Combinations

| | Nuclei | | | | | Coatings | | |
|---|---|---|---|---|---|---|---|---|
| | Clay Minerals | Hydrated $Al_2O_3$ | UFGL | PCC | Diatomaceous Earth | Silicates | Silicas | Alumino Carbonates |
| Clay Minerals | . | . | . | * | . | * | * | * |
| Hyd $Al_2O_3$ | . | . | . | * | . | * | * | * |
| UFGL | . | . | . | * | . | * | * | * |
| PCC | * | * | * | . | * | * | * | * |
| Diatomaceous earth | . | . | . | | | * | * | * |
| Silicates | | | | | | * | * | * |
| Silicas | | | | | | | * | * |
| Alumino Carbonates | | | | | | | | * |

* Useful combinations

A particularly preferred embodiment of the invention includes kaolinite mineral nuclei with synthetic alkali metal silicates and synthetic alkali metal aluminosilicates being coated thereon. Preferred kaolinite nuclei for use in the invention are the clays sold commercially by the J. M. Huber Corporation under the tradename Hydragloss® and Hydrasperse®.

A particularly preferred coating material is a modified precipitated aluminosilicate pigment such as described in U. S. Patents 3,798,046, 3,909,286 and its reissue RE 30,568, all to Robert C. Fitton, and assigned to the same assignee as the application. The disclosures of each of these three patents are specifically incorporated herein by reference. The pigments disclosed in these patents are alkaline earth modified alkali metal aluminosilicate pigments. These pigments are produced by introducing dilute solutions of an alkali metal silicate and a water soluble salt of aluminum and a strong acid, such as aluminum sulfate, into an aqueous reaction media containing dispersed therein an alkaline earth metal salt or hydroxide. When solutions of the alkali metal silicate and aluminum sulfate are added to the reaction mass which contains the alkaline earth metal salt or hydroxide, the latter serves as a nucleus or nucleating agent which alters the structure of the resulting modified pigment. Thus, when this pigment serves as a coating on the mineral in the present invention, the nucleus or mineral core will comprise an alkaline earth metal salt or hydroxide having coated thereon the reaction product of the alkali metal silicate and aluminum sulfate.

The preferred pigments described herein are finely divided precipitated white powdery compositions which comprise chemically bound oxides of magnesium, sodium, aluminum and silicon in a uniform matrix, substantially all of the discreet particles of which are less than 1 $\mu$m in diameter. The molar ratio of $SiO_2$ to $Na_2O$ is about 10.0 to 13.0:1 and the molar ratio of $Na_2O$ to $Al_2O_3$ is from about 0.3 to 1.0:1. The alkaline earth metal oxide is present in an amount of from about 0.1 to 8% based on the dry weight of the composition having a specific gravity of 2.0 to 2.4. The preferred silicate of this patent includes magnesium as an alkaline earth metal and sodium as the alkali metal.

A method for practicing the process of the present invention is set forth in the process flow diagram of Figure 4. This flow diagram illustrates the preferred embodiment wherein the mineral is kaolinite and the coating is a sodium magnesium aluminosilicate product of the type described in Fitton Reissue Patent 30,568. In this process, aqueous reaction media of sodium silicate, aluminum sulfate or alum and magnesium hydroxide are prepared and placed in reactors 1, 2 and 3, respectively as shown. A slurry of kaolinite or kaolin is provided in reactor 4. Agitated reactor 5 is provided which is maintained under good conditions of agitation. The magnesium hydroxide reaction medium is added to the reactor and a small amount of the aluminum sulfate solution is then added to the magnesium hydroxide. At this point, the remaining aluminum sulfate and sodium silicate solutions are continued to be added simultaneously at temperatures generally in the range of about 50-100°C, preferably 60°C, while maintaining the slow addition rate with good agitation. At this point the slurry of kaolin is added while maintaining sufficient agitation to suspend the kaolin particles and while continuing the simultaneous addition of the aluminum sulfate and sodium silicate. The total time for addition of the kaolin slurry is usually less than about ten minutes on a batch basis. After the kaolin is added, the remaining silicate and aluminum sulfate solutions are continued to be added for a period of time ranging from 20 minutes to 1 hour. Thereafter the addition of the aluminum sulfate is discontinued and the reaction slurry is stirred until the precipitation/encapsulation reaction is complete. The pH is then adjusted to the range of about 8.0 to 10.0 by addition of excess sodium silicate solution for this reaction. The resulting slurry is then passed to filter 7 from which the product is removed by line 8 to dispersion mill 9 for grinding to a desired particle size. The product may then be recovered at line 10. Optionally, where additional drying is desired, the product is passed by line 11 to drier 12 from which the dried product is recovered at 13.

It is of course to be understood that any reaction procedure can be used if sufficient reaction time is provided for the paper pigment reactant to form the generally uniform coating on the mineral nucleus. For example the magnesium hydroxide and kaolin slurry could be provided in the reactor to which aluminum sulfate is added with agitation. Thereafter the sodium silicate solution can be added simultaneously with aluminum sulfate solution in sufficient rates to provide a gradual increase in pH during precipitation. Thereafter the pH of the reaction slurry is adjusted to the desired range.

The following examples are presented to illustrate the invention but it is not to be considered as limited thereto. In the Examples and throughout the specification, parts are by weight unless otherwise indicated.

## Example 1

A batch of pigment is prepared by adding to 1020g of $H_2O$ at 60°C, 248.40g of clay slurry containing 69.79% kaolin and sufficient $Mg(OH)_2$ slurry to provide 0.53% $Mg(OH)_2$ in the total aqueous slurry. To this slurry, clarified alum is added with agitation to yield a concentration of 0.75% $Al_2(SO_4)_3$. To this slurry, 831.6g of sodium silicate solution containing 8.69% $Na_2O$ and 22.39% $SiO_2$ is added simultaneously with 349.35g of alum solution containing 28.33% $Al_2(SO_4)_3$. Rates of addition are adjusted to provide a gradual increase in pH during the precipitation. Sufficient agitation to suspend the kaolin particles is maintained. The final reaction slurry is adjusted to pH 9.2. The pigment is recovered by filtration, washed, and dispersed to form a pigment slurry. The slurry may, depending on the specific application, be dried and milled. A finely divided pigment results.

Example 2

A batch is produced by preparing 1031.41g of an aqueous reaction medium containing 0.65% $Mg(OH)_2$. Clarified alum is added slowly with agitation to yield a concentration of 0.92% $Al_2(SO_4)_3$ at 60 °C. At this point, simultaneous addition of alum and sodium silicate containing 28.33% $Al_2(SO_4)_3$ at 60 °C and containing 8.69% $Na_2O$ and 22.39% $SiO_2$, at 60 °C, respectively is started and continued at a slow rate while maintaining good agitation for 6.5 minutes. At this point, the addition of 154.20g of a slurry of clay containing 69.70% kaolin is started while maintaining sufficient agitation to suspend the kaolin particles and continuing simultaneous addition of alum and sodium silicate. Total clay addition requires preferably less than 5 minutes. Additions of silicate and alum solution are continued for a total of 35 minutes. The addition of alum is discontinued and the reaction slurry brought to pH 9.2 with excess sodium silicate solution. The pigment is recovered and washed to remove soluble salts. The washed pigment slurry is adjusted to pH of 8.0 with alum containing 28.33% $Al_2(SO_4)_3$. The pigment slurry is milled to produce finely dispersed particles before being dried and milled. This product is useful either in dry or in slurry form depending on the specific application.

Example 3

Rather than producing the expected paper optional performance, samples of pigments prepared by the method of Example 2 exhibit an unexpected boost in performance over the weighted average performance of the individual components or the physical blend. Table 2 following illustrates the performance advantage gained from pigments of this invention. In Table 2 the effect of the level of kaolin present in the pigment on paper optical properties is illustrated. In Table 2 the paper optical performance is presented as determined by actual tests and based on a calculated performance. The pigment composition obtained according to the method of Example 2 contained 70% of the sodium magnesium aluminosilicate formed as a precipitate and 30% of kaolin nucleus. The pigments were evaluated in paper with respect to TAPPI opacity and with respect to ISO brightness. The table sets forth the actual performance for both opacity and brightness at low levels of 3% and 6% and compares actual performance, calculated performance, and the performance of a physical blend of the kaolin and the sodium magnesium alumino pigment or precipitate. Note that the calculated performance includes the performance for the reaction product as well as for each of the individual components, kaolin and precipitate.

TABLE 2

Paper Optical Performance
Actual vs Calculated

Pigment composition of 70% precipitate and 30% Kaolin

| Pigment | TAPPI Opacity 3% filler | TAPPI Opacity 6% filler | ISO Brightness 3% filler | ISO Brightness 6% filler |
|---|---|---|---|---|
| Actual performance | 84.1 | 86.9 | 86.3 | 87.2 |
| Calculated Performance (70/30) | 82.9 | 85.6 | 86.1 | 87.0 |
| 100% Kaolin | 81.0 | 84.0 | 84.4 | 83.9 |
| 100% Precipitate | 83.7 | 86.3 | 86.8 | 88.3 |
| Physical Blend (70/30) | 83.0 | 85.6 | 86.5 | 87.3 |

In the following Table 3, the effect of the level of kaolin nucleus present in the pigment on paper optical properties is illustrated. In this work, the procedure of Example 2 was used while varying the amount of kaolin as the mineral nucleus and the amount of coating or active paper pigment being formed. From the table it will be seen that the pigment composition contains precipitate and kaolin ranging from 0% to 100% in increments of 25. Thereafter optical performance of the pigments was evaluated by preparing handsheets using accepted standard TAPPI methods. In all cases samples of pigments were added as slurries to a standard pulp blend to yield the single filler fine paper furnish. Handsheets were evaluated using standard ISO methods (2469, 2470, 2471, and 3680) for determining paper opacity (calculated TAPPI) and brightness (ISO). Optical properties were measured using a Technidyne, Technibright TB-1C. In this table it will be seen that the preferred products with respect to opacity will contain at least about 25% of the precipitate and from about 25-75% of the kaolin nucleus. With respect to brightness, greater amounts of the precipitate appear to increase the brightness values. The table indicates that 6% filler amounts using at least 50% of the paper active pigment or precipitate provides the excellent brightness values. Table 3 is as follows:

TABLE 3

| Paper Optical Performance vs Pigment Composition | | | | | |
|---|---|---|---|---|---|
| Pigment Composition | | TAPPI Opacity | | ISO Brightness | |
| % Precipitate | % Kaolin | 3% filler | 6% filler | 3% filler | 6% filler |
| 0 | 100 | 81.0 | 84.0 | 84.4 | 83.9 |
| 25 | 75 | 82.4 | 85.3 | 85.1 | 85.3 |
| 50 | 50 | 83.8 | 86.5 | 85.8 | 86.6 |
| 75 | 25 | 84.2 | 87.0 | 86.3 | 87.2 |
| 100 | 0 | 83.7 | 86.3 | 86.8 | 88.3 |
| Note: Pigment produced using procedure outlined in Example 2. | | | | | |

The increase in performance realized by use of the product of the invention is a result of improved light scattering capability of the pigment. It appears to be superior to other pigments which are commonly used as fillers in paper. In the following Table 4 are set forth pigment scattering coefficients for various combinations of the composite pigment of this invention using from 50% to 80% of the active paper pigment in combination with from 20% to 50% of a kaolin nuclei of a product of the type prepared in Example 2. Comparisons of the scattering coefficient values were made for each of these combinations and compared with the same scattering coefficient values for a calcined clay and a precipitated sodium aluminosilicate. The scattering coefficient data were calculated using the appropriate Kubelka-Munk equations. The data is reported for a loading level of 6% filler.

As may be seen from Table 4, all values of the product of the invention are substantially improved over calcined clay or precipitated silicate and particularly excellent values are shown in products which contain up to 70 to 80% of the active paper pigment in combination with 20-30% of the kaolin nucleus. Table 4 is as follows.

TABLE 4

| Pigment Scattering Coefficient | | |
|---|---|---|
| Pigment Composition | | Scattering Coefficient |
| % Precipitate | % Kaolin | @8% filler S, $cm^2/g$ |
| 50 | 50 | 2657 |
| 65 | 35 | 2779 |
| 70 | 30 | 2903 |
| 80 | 20 | 3004 |
| calcined clay | - | 2343 |
| precipitated silicate | - | 2572 |

Example 4

In this Example, the process of Example 2 is repeated except that in this procedure, Scanning Electron Micrographs (SEM) of the product were made at various steps of the reaction in order to show development of the product. These SEM photographs are shown in the attached Figures 5A, 5B, 5C, 5D, 5E, 5F, 5G, 5H and 5I. All of the SEM photographs were taken at 10,000X magnification.

With reference to Figures 5A and 5B, it will be seen that in Figures 5A and 5B, at 10 and 14 minutes into the reaction, the modified alkali metal aluminosilicate material is forming as a product prior to addition of any of the kaolin. The kaolin slurry is added 15 minutes into the reaction. Figure 5C at 16 minutes shows the mixture of uncoated kaolin particles and the formed modified alkali metal aluminosilicate. Figures 5D, 5E, 5F, 5G, 5H and 5I show formation of the products continuing at 20 minutes, 25 minutes, 30 minutes, 35 minutes, 40 minutes and 43.5 minutes, respectively. The photomicrograph of Figure 1 shows the final product after precipitation is complete.

From this series of timed photographs, it will be seen that the modified alkali metal aluminosilicate product is initially formed and then precipitates onto the surfaces of the kaolin platelets or particles.

Example 5

In order to assess the characteristics of the product produced by Example 2, a comparison was made using SEM photographs of the mineral nucleus, a kaolin clay particle, in this case Hydrasperse®, a commercial kaolin clay available from J. M. Huber Corporation, a simple mixture of the kaolin clay Hydrasperse® and the commercial modified alkali metal alumino silicate product, and the product of Example 2. Figure 2 shows the kaolin clay product, Figure 3 shows the physical mixture of the kaolin clay and the modified alkali metal aluminosilicate and Figure 1 shows the milled form of the final product of Example 2, all of these particles being shown at 10,000X magnification.

A comparison of Figures 1, 2 and 3 shows a clear difference in particle shape, appearance and size between the starting kaolin clay of Figure 2, the physical mixture of the commercial modified alkali metal aluminosilicate paper pigment and the kaolin Hydrasperse® and the product according to the present invention of Figure 1. The product of Figure 1 contains more uniform particles and illustrates a generally continuous and uniform coating.

Example 6

The apparent similarity between the product as disclosed in U. S. Patent 4,026,721 to Kurrle prompted a repeat of the work of Kurrle as in his Example 1. The product produced according to U. S. Patent 4,026,721 to Kurrle is a calcium silicate formed in situ by reaction between calcium chloride and sodium silicate, the calcium silicate reaction product then being deposited on planar surfaces of a kaolin substrate. According to the patent, the calcium silicate is deposited as spherical particles. In the following work, the calcium silicate is referred to as Casil. A series of pigments representing 100% synthetic pigment, 80% synthetic Casil/20% kaolin, and 60% synthetic Casil/40% kaolin, were repeated as outlined. The experiment was repeated using Hydragloss® 90 clay slurry in dry form. All reactant concentrations were specifically duplicated, however; 3.33 MR sodium silicate was substituted for the 3.22 MR specified.

Paper optical properties were measured on handsheets prepared from the Kurrle pigments and compared with pigments of this invention. Figure 8 illustrates the level of performance by the pigments of Example 2 (at various levels of kaolin) as compared with the Kurrle pigments. At all levels of kaolin content, the Kurrle pigments are deficient in paper optical performance when compared to the products of Example 2.

Example 7

In additional work, Kurrle Example 1 was repeated but substituting $Al_2(SO_4)_3 \cdot 14\ H_2O$ for $CaCl_2 \cdot 2H_2O$ in the Kurrle reaction. The replacement was made on an equivalent moles of metal oxide basis (i.e., $1Al_2O_3 = 1CaO$). Reaction concentrations were duplicated, however, once again 3.33 MR sodium silicate was substituted for the 3.22 MR specified. Additional aluminum sulfate which was added by Kurrle for pH adjustment was added or deleted as required to attain the pigment pH specified in the patent. Samples of pigment were prepared that contained 40%, 20% and 0% kaolin, respectively.

Chemical analysis of the synthetic pigment (containing 40% kaolinite) was then compared with the synthetic pigment produced by Example 2 (containing 40% kaolin). It is obvious that the pigments produced have only slight similarities in composition. The pigment of Example 2 of this invention (containing 40% kaolin) has substantially more $Na_2O$ and $Al_2O_3$, as well as the additional MgO.

| Chemical Composition Comparison | | |
|---|---|---|
| $Al_2(SO_4)_3$ | Pigment of this invention | Kurrle |
| % LOI | 12.0 | 11.5 |
| % $SiO_2$ | 57.8 | 66.6 |
| % $Al_2O_3$ | 21.7 | 17.1 |
| % $Na_2O$ | 4.6 | 2.5 |
| % MgO | 0.9 | - |
| % $Na_2SO_4$ | 3.1 | 4.3 |
| | | Pre dried, 2 hrs, 105 °C |
| Pigment of this invention = 0.35 $Na_2O$:0.10 MgO:$Al_2O_3$:4.53 $SiO_2$:3.14 $H_2O$. Kurrle = 0.24 $Na_2O$:$Al_2O_3$:6.63 $SiO_2$:3.81 $H_2O$. | | |

The claimed pigment is produced with 2.6 MR silicate which could account for a portion of the differences in $SiO_2$ level in the chemical composition.

Evaluation of these pigments in paper clearly shows that the optical performance of pigments produced by the Kurrle patent are inferior to the pigments of the invention (Figure 9).

Performance in paper can typically be related to a pigment's ability to scatter light. Therefore, the Kubelka-Munk Scattering Coefficients were calculated using the appropriate equations. Comparison of the data at 6% filler level clearly shows the superior light scattering ability of the claimed pigment as compared with the pigments produced using methods taught by the Kurrle patent.

| Comparison of Scattering Coefficients | |
|---|---|
| Pigment (@60% Kaolin) | Scattering Coefficients @ 6% filler, S, $cm^2/g$ |
| Kurrle (CaSil) | 1834 |
| Kurrle ($Al_2O_3$) | 1340 |
| Pigment of this invention | 2389 |

A detailed evaluation of pigment structure as illustrated by the attached, Scanning Electron Micrographs of Figures 6A, 6B and 6C and 7A, 7B and 7C, clearly shows the difference in the two pigments. It is evident that the Alumina-Kurrle pigment does not coat the kaolin particles. The micrographs show many kaolin particles that remain discreet after the formation of the pigment unlike the claimed pigment in which the kaolin particles are almost totally coated with precipitate.

It is clearly evident from the data presented that the claimed pigments and methods of preparation are not similar to the calcium silicate-Kurrle pigments. The Alumina analog pigment, while being similar in composition, differs in structure, appearance and most importantly, function, from the pigments of the claimed invention.

Example 8

A pigment is produced by preparing 730.0g of an aqueous reaction medium at 60 °C. To this medium is added 1447.2g of sodium silicate solution containing 5.40% $Na_2O$ and 17.00% $SiO_2$ at 60 °C, simultaneously with 623.7g of aluminum sulfate solution containing 17.90% $Al_2(SO_4)_3$. Sufficient agitation is maintained to suspend the pigment particles. Approximately 5 minutes after the start of the simultaneous additions, 206.36g of ground calcium carbonate slurry (ground limestone) with 50% solids is added.

Upon completion of simultaneous addition, an additional 311.85g of aluminum sulfate is added to reduce the slurry pH to 6.5. The pigment slurry is recovered, filtered, washed and dried. A finely divided composite pigment results.

Example 9

A pigment is produced by preparing 1031.41g of an aqueous reaction medium containing 0.65% $Mg(OH)_2$. Clarified alum is added slowly with agitation to yield a concentration of 0.92% $Al_2(SO_4)_3$ at 60 °C. At this point, simultaneous addition of alum and sodium silicate containing 28.33% $Al_2(SO_4)_3$ at 60 °C and 8.96% $Na_2O$ and 22.39% $SiO_2$ at 60 °C, respectively is started and continued at a slow rate maintaining good agitation for 6.5 minutes. At this point, addition of 346.36g of a slurry of calcium carbonate (Dolomite Limestone) containing 50% solids is started while maintaining sufficient agitation to suspend the pigment particles. Simultaneous additions are continued for 35 minutes. The pigment is recovered, washed, dried and milled. A finely divided composite pigment results.

For comparison purposes, the pigment of Example 9 containing 25% ground calcium carbonate was compared with a second sample produced by combining, as a simple mixture, 75% synthetic sodium magnesium alumino silicate and 25% ground calcium carbonate. Using standard TAPPI and ISO methods described above, handsheets were produced and evaluated as shown in the following table. It is clearly evident from the table that the performance of the novel coalesced pigment is superior in opacity and brightness to the weighted average performance calculated from the individual components.

| PAPER PERFORMANCE COMPARISON | | | | |
|---|---|---|---|---|
| | TAPPI OPACITY | | ISO BRIGHTNESS | |
| | 2% Filler | 4% Filler | 2% Filler | 4% Filler |
| Novel Pigment | | | | |
| 25% Dolomite Limestone | 87.5 | 89.0 | 59.9 | 61.4 |
| Simple Mixture | | | | |
| A. Synthetic Alumino Silicate | 87.4 | 88.9 | 59.9 | 62.2 |
| B. Ground Limestone | 86.0 | 86.5 | 56.7 | 56.2 |
| Calculated Weight Avg. 75%a + 25%b | 87.1 | 88.3 | 59.1 | 60.7 |
| Unfilled | 85.5 | -- | 58.1 | -- |

Example 10

Using TAPPI standard methods handsheets were produced from a groundwood furnish. The sheets containing novel pigments having two types of carbonate mineral are compared to other common fillers utilized in the paper industry in the following table:

| TYPICAL PAPER PERFORMANCE | | | | |
|---|---|---|---|---|
| | TAPPI OPACITY | | ISO BRIGHTNESS | |
| | 2% Filler | 4% Filler | 2% Filler | 4% Filler |
| Novel Pigment | | | | |
| 25% Dolomite Limestone (Example 8) | 88.8 | 89.9 | 55.8 | 58.2 |
| Novel Pigment | | | | |
| 25% Calcium Carbonate (Example 9) | 88.5 | 90.0 | 56.1 | 58.5 |
| Synthetic Alumino Silicate | 88.1 | 89.5 | 55.9 | 58.0 |
| Calcined Clay | 88.7 | 89.8 | 56.0 | 58.1 |
| Unfilled | 86.6 | -- | 53.9 | -- |

The pigments of this invention (containing up to 25% low cost mineral substrate) offer superior performance at 4% filler level to calcined clay or synthetic alumino pigments.

The invention has been described herein with reference to certain preferred embodiments. However, as obvious variations thereon will become apparent to those skilled in the art, the invention is not to be considered as limited thereto.

**Claims**

**1.** A composite product comprising an inert mineral nucleus coated with an active paper pigment, wherein the mineral nucleus is selected from the group consisting of kaolins, leached clays, talcs, micas, serpertinite, montmorillonites, hydrated alumina, calcium carbonate, magnesium carbonate, ground limestone, diatomaceous earth, and mixtures thereof; the coating consists of a continuous uniform coating of discreet particles of an active paper pigment selected from the group consisting of synthetic alkali metal silicates, alkali metal aluminosilicates, alkaline earth metal silicates, alkaline earth metal aluminosilicates, precipitated silicas, alkaline earth alumino carbonates and mixtures thereof, the composite product being obtainable by

(a) forming an aqueous media containing reagents necessary to form said active paper pigment;
(b) forming an aqueous slurry of said mineral nucleus;
(c) providing an agitated reactor vessel for receipt of said reagents;
(d) adding a sufficient amount of reagents necessary to form said active paper pigment to said reactor vessel so as to form at least a portion of said active paper pigment;

(e) adding said slurry of mineral nucleus;
(f) continuing the simultaneous addition of the major portion of said active paper pigment reagents and said aqueous slurry of said mineral nucleus under alkaline reaction conditions at temperatures ranging from 40 to 100 °C until all reagents are added to the mixture; and
(g) recovering the solid composite product.

2. A composite product comprising an inert mineral nucleus encapsulated with a continuous uniform coating of an active paper pigment, wherein the mineral nucleus is selected from the group consisting of kaolins, leached clays, talcs, micas, serpertinite, montmorillonites, hydrated alumina, calcium carbonate, magnesium carbonate, ground limestone, diatomaceous earth, and mixtures thereof; the coating consists of a continuous uniform coating of discreet particles of an active paper pigment selected from the group consisting of synthetic alkali metal silicates, alkali metal aluminosilicates, alkaline earth metal silicates, alkaline earth metal aluminosilicates, precipitated silicas, alkaline earth alumino carbonates and mixtures thereof, the composite product being obtainable by
(a) forming an aqueous media containing reagents necessary to form said active paper pigment;
(b) forming an aqueous slurry of said mineral nucleus;
(c) providing an agitated reactor vessel for receipt of said reagents;
(d) adding a sufficient amount of reagents necessary to form said active paper pigment to said reactor vessel so as to form at least a portion of said active paper pigment;
(e) adding said slurry of mineral nucleus;
(f) continuing the simultaneous addition of the major portion of said active paper pigment reagents and said aqueous slurry of said mineral nucleus under alkaline reaction conditions at temperatures ranging from 40 to 100 °C until all reagents are added to the mixture; and
(g) recovering the solid composite product.

3. The composite product according to claim 1 wherein at least 80% of the nucleus is coated by the paper pigment.

4. The composite product according to claim 1 or 2 wherein the coating of the paper pigment is at least 0.3μm in thickness.

5. The composite product according to claim 2 wherein at least 80% of the nucleus is encapsulated by the paper pigment.

6. The composite product according to claim 1 wherein the mineral nucleus is a kaolin clay and the continuous coating comprises a sodium alumino magnesium silicate.

7. The composite product according to claim 1 wherein the nucleus is kaolinite and the coating is alkali metal alumino magnesium silicate.

8. The composite product according to claim 2 wherein the mineral nucleus is a kaolin clay and the continuous coating comprises a sodium alumino magnesium silicate.

9. The composite product according to claim 2 wherein the nucleus is kaolinite and the coating is alkali metal alumino magnesium silicate.

10. A method for the preparation of a composite product according to one of claims 1 to 7, said method comprising the steps of:
(a) forming aqueous media containing reagents necessary to form said active paper pigment;
(b) forming an aqueous slurry of said mineral nucleus;
(c) providing an agitated reactor vessel for receipt of said reagents;
(d) adding a sufficient amount of reagents necessary to form said active paper pigment to said reactor vessel so as to form at least a portion of said active paper pigment;
(e) adding said slurry of mineral nucleus;
(f) continuing the simultaneous addition of the major portion of said active paper pigment reagents and said aqueous slurry of said mineral nucleus under alkaline reaction conditions at temperatures ranging from 40 to 100 °C until all reagents are added to the mixture; and
(g) recovering the solid composite product.

11. A method for the preparation of a composite product of claim 8 which comprises the steps of
(a) forming aqueous solutions of sodium silicate and aluminum sulphate;
(b) forming aqueous slurries of magnesium hydroxide and kaolin clay;
(c) adding at least a portion of said aluminum sulphate solution and said magnesium hydroxide slurry to an agitated reactor vessel;
(d) beginning the addition of said sodium silicate solution in a sufficient amount to form at least sodium magnesium aluminosilicate;
(e) adding said kaolin slurry;
(f) continuing the simultaneous addition of all of said reagents until each reagent has been added to said agitator reactor, the addition of the reagents to the reactor being carried out under conditions of a temperature of 40-100 °C and an alkaline pH;
(g) thereafter continuing the addition of sodium silicate solution until a final pH of 8.0 to 10.0 is obtained; and
(h) recovering the formed solid composite product.

12. A method for the preparation of a composite product of claim 9 which comprises the steps of
(a) forming aqueous solutions of alkali metal silicate and aluminum sulphate;
(b) forming aqueous slurries of magnesium hydroxide and kaolin clay;
(c) adding at least a portion of said aluminum sulphate solution and said magnesium hydroxide slurry to an agitated reactor vessel;
(d) beginning the addition of said alkali metal silicate solution in a sufficient amount to form at least alkali metal magnesium aluminosilicate;
(e) adding said kaolin slurry;
(f) continuing the simultaneous addition of all of said reagents until each reagent has been added to said agitator reactor, the addition of the reagents to the reactor being carried out under conditions of a temperature of 40-100 °C and an alkaline pH;
(g) thereafter continuing the addition of alkali metal silicate solution until a final pH of 8.0 to 10.0 is obtained; and
(h) recovering the formed solid composite product.

13. The method according to claim 11 wherein the solid composite product is recovered by filtration and is then milled to the desired particle size.

14. The method according to claim 13 wherein the milled product is then spray dried to form a product.

15. Use of the composite products of one of claims 1 to 9 as a paper pigment, a coating pigment and filler.

**Patentansprüche**

1. Zusammengesetztes Produkt, das einen mit einem aktiven Papierpigment beschichteten inerten mineralischen Kern umfaßt, wobei der mineralische Kern aus der Gruppe bestehend aus Kaolinen, Bleicherden, Talken, Glimmern, Serpentinit, Montmorilloniten, hydratisiertem Aluminiumoxid, Calciumcarbonat, Magnesiumcarbonat, gemahlenem Kalkstein, Diatomeenerde und Mischungen davon gewählt wird, die Beschichtung aus einem kontinuierlichen gleichförmigen Überzug aus einzelnen Partikeln eines aktiven Papierpigments besteht, das aus der Gruppe bestehend aus synthetischen Alkalimetallsilicaten, Alkalimetallaluminiumsilicaten, Erdalkalimetallsilicaten, Erdalkalimetallaluminiumsilicaten, gefällten Siliciumdioxiden, Erdalkalialuminiumcarbonaten und deren Mischungen gewählt wird, wobei das zusammengesetzte Produkt erhältlich ist durch
(a) Herstellung eines wässerigen Mediums, das die für die Bildung des aktiven Papierpigments erforderlichen Reagenzien enthält;
(b) Herstellung einer wässerigen Aufschlemmung des mineralischen Kerns;
(c) Bereitstellung eines Reaktionsgefäßes mit Rührer zur Aufnahme der Reagenzien;
(d) Beschickung des Reaktionsgefäßes mit einer ausreichenden Menge an für die Bildung des aktiven Papierpigments erforderlichen Reagenzien, um zumindest einen Teil des aktiven Papierpigments zu bilden;
(e) Zusetzen der Aufschlemmung des mineralischen Kerns;
(f) Fortführung der gleichzeitigen Zugabe des überwiegenden Teils der Reagenzien für das aktive Papierpigment und der wässerigen Aufschlemmung des mineralischen Kerns unter alkalischen Reaktionsbedingungen bei Temperaturen zwischen 40 und 100 °C, bis alle Reagenzien der Mischung zugesetzt sind; und
(g) Sammeln des festen zusammengesetzten Produkts.

**2.** Zusammengesetztes Produkt, das einen inerten mineralischen Kern umfaßt, der von einer kontinuierlichen gleichförmigen Beschichtung aus einem aktiven Papierpigment eingekapselt ist, wobei der mineralische Kern aus der Gruppe bestehend aus Kaolinen, Bleicherden, Talken, Glimmern, Serpentinit, Montmorilloniten, hydratisiertem Aluminiumoxid, Calciumcarbonat, Magnesiumcarbonat, gemahlenem Kalkstein, Diatomeenerde und Mischungen davon gewählt wird, die Beschichtung aus einem kontinuierlichen gleichförmigen Überzug aus einzelnen Partikeln eines aktiven Papierpigments besteht, das aus der Gruppe bestehend aus synthetischen Alkalimetallsilicaten, Alkalimetallaluminiumsilicaten, Erdalkalimetallsilicaten, Erdalkalimetallaluminiumsilicaten, gefällten Siliciumdioxiden, Erdalkalialuminiumcarbonaten und deren Mischungen gewählt wird, wobei das zusammengesetzte Produkt erhältlich ist durch
(a) Herstellung eines wässerigen Mediums, das die für die Bildung des aktiven Papierpigments erforderlichen Reagenzien enthält;
(b) Herstellung einer wässerigen Aufschlemmung des mineralischen Kerns;
(c) Bereitstellung eines Reaktionsgefäßes mit Rührer zur Aufnahme der Reagenzien;
(d) Beschickung des Reaktionsgefäßes mit einer ausreichenden Menge an für die Bildung des aktiven Papierpigments erforderlichen Reagenzien, um zumindest einen Teil des aktiven Papierpigments zu bilden;
(e) Zusetzen der Aufschlemmung des mineralischen Kerns;
(f) Fortführung der gleichzeitigen Zugabe des überwiegenden Teils der Reagenzien für das aktive Papierpigment und der wässerigen Aufschlemmung des mineralischen Kerns unter alkalischen Reaktionsbedingungen bei Temperaturen zwischen 40 und 100 °C, bis alle Reagenzien der Mischung Zugesetzt sind; und
(g) Sammeln des festen Zusammengesetzten Produkts.

**3.** Zusammengesetztes Produkt nach Anspruch 1, bei dem mindestens 80 % des Kerns mit dem Papierpigment beschichtet sind.

**4.** Zusammengesetztes Produkt nach Anspruch 1 oder 2, bei dem die Dicke der Beschichtung aus Papierpigment mindestens 0,3 µm beträgt.

**5.** Zusammengesetztes Produkt nach Anspruch 2, bei dem mindestens 80 % des Kerns von dem Papierpigment eingekapselt sind.

**6.** Zusammengesetztes Produkt nach Anspruch 1, bei dem der mineralische Kern Kaolin-Ton ist und die kontinuierliche Beschichtung ein Natriumaluminiummagnesiumsilicat enthält.

**7.** Zusammengesetztes Produkt nach Anspruch 1, bei dem der Kern Kaolinit ist und die Beschichtung ein Alkalimetallaluminiummagnesiumsilicat ist.

**8.** Zusammengesetztes Produkt nach Anspruch 2, bei dem der mineralische Kern Kaolin-Ton ist und die kontinuierliche Beschichtung ein Natriumaluminiummagnesiumsilicat enthält.

**9.** Zusammengesetztes Produkt nach Anspruch 2, bei dem der Kern Kaolinit ist und die Beschichtung ein Alkalimetallaluminiummagnesiumsilicat ist.

**10.** Verfahren zur Herstellung eines Zusammengesetzten Produkts gemäß einem der Ansprüche 1 bis 7, wobei dieses Verfahren die folgenden Schritte umfaßt:
(a) Herstellung eines wässerigen Mediums, das die für die Bildung des aktiven Papierpigments erforderlichen Reagenzien enthält;
(b) Herstellung einer wässerigen Aufschlemmung des mineralischen Kerns;
(c) Bereitstellung eines Reaktionsgefäßes mit Rührer zur Aufnahme der Reagenzien;
(d) Beschickung des Reaktionsgefäßes mit einer ausreichenden Menge an für die Bildung des aktiven Papierpigments erforderlichen Reagenzien, um zumindest einen Teil des aktiven Papierpigments zu bilden;
(e) Zusetzen der Aufschlemmung des mineralischen Kerns;

(f) Fortführung der gleichzeitigen Zugabe des überwiegenden Teils der Reagenzien für das aktive Papierpigment und der wässerigen Aufschlemmung des mineralischen Kerns unter alkalischen Reaktionsbedingungen bei Temperaturen zwischen 40 und 100 °C, bis alle Reagenzien der Mischung zugesetzt sind; und
(g) Sammeln des festen zusammengesetzten Produkts.

**11.** Verfahren zur Herstellung eines zusammengesetzten Produkts gemäß Anspruch 8, das die folgenden Schritte umfaßt:
(a) Herstellung wässeriger Lösungen von Natriumsilicat und Aluminiumsulfat;
(b) Herstellung wässeriger Aufschlemmungen von Magnesiumhydroxid und Kaolin-Ton;
(c) Beschickung eines Reaktionsgefäßes mit Rührer mit zumindest einem Teil der Aluminiumsulfatlösung und der Magnesiumhydroxidaufschlemmung;
(d) Beginnen mit der Zugabe der Natriumsilicatlösung in ausreichender Menge, um zumindest Natriummagnesiumaluminiumsilicat zu bilden;
(e) Zugabe der Kaolinaufschlemmung;
(f) Fortführung der gleichzeitigen Zugabe aller genannten Reagenzien, bis jedes Reagenz dem Rührreaktor zugesetzt worden ist, wobei die Zugabe der Reagenzien zum Reaktor unter Bedingungen einer Temperatur von 40-100 °C und eines alkalischen pH-Werts erfolgt;
(g) anschließende Fortführung der Zugabe von Natriumsilicatlösung, bis ein End-pH-Wert von 8,0 bis 10,0 erhalten wird; und
(h) Sammeln des gebildeten festen zusammengesetzten Produkts.

**12.** Verfahren zur Herstellung eines zusammengesetzten Produkts gemäß Anspruch 9, das die folgenden Schritte umfaßt:
(a) Herstellung wässeriger Lösungen von Alkalimetallsilicat und Aluminiumsulfat;
(b) Herstellung wässeriger Aufschlemmungen von Magnesiumhydroxid und Kaolin-Ton;
(c) Beschickung eines Reaktionsgefäßes mit Rührer mit zumindest einem Teil der Aluminiumsulfatlösung und der Magnesiumhydroxidaufschlemmung;
(d) Beginnen mit der Zugabe der Alkalimetallsilicatlösung in ausreichender Menge, um zumindest Alkalimetallmagnesiumaluminiumsilicat zu bilden;
(e) Zugabe der Kaolinaufschlemmung;
(f) Fortführung der gleichzeitigen Zugabe aller Reagenzien, bis jedes Reagenz dem Rührreaktor zugesetzt worden ist, wobei die Zugabe der Reagenzien zum Reaktor unter Bedingungen einer Temperatur von 40-100 °C und eines alkalischen pH-Werts erfolgt;
(g) anschließende Fortführung der Zugabe von Alkalimetallsilicatlösung, bis ein End-pH-Wert von 8,0 bis 10,0 erhalten wird; und
(h) Sammeln des gebildeten festen zusammengesetzten Produkts.

**13.** Verfahren nach Anspruch 11, bei dem das feste zusammengesetzte Produkt durch Filtration gesammelt und dann bis zur gewünschten Partikelgröße gemahlen wird.

**14.** Verfahren nach Anspruch 13, bei dem das gemahlene Produkt anschließend sprühgetrocknet wird, um ein Produkt zu bilden.

**15.** Verwendung der zusammengesetzten Produkte eines der Ansprüche 1 bis 9 als ein Papierpigment, ein Beschichtungspigment und als Füllstoff.

**Revendications**

**1.** Produit composite comprenant un noyau minéral inerte revêtu d'un pigment actif pour papier, dans lequel le noyau minéral est choisi dons le groupe comprenant les kaolins, les argiles lessivées, les talcs, les micas, la serpentinite, les montmorillonites, l'alumine hydratée, le carbonate de calcium, le carbonate de magnésium, la choux broyée, la terre de diatomées, et leurs mélanges ; le revêtement étant formé d'un revêtement uniforme continu de particules séparées d'un pigment actif pour papier choisi dans le groupe comprenant les silicates de métaux alcalins synthétiques, les aluminosilicates de métaux alcalins, les silicates de métaux alcalino-terreux, les aluminosilicates de métaux alcalinoterreux, les silices précipitées, les aluminocarbonates de métaux alcalino-terreux et leurs mélanges, le produit composite pouvant être obtenu par :

(a) la formation d'un milieu aqueux contenant les réactifs nécessaires pour former ledit pigment actif pour papier ;
(b) la formation d'une bouillie aqueuse dudit noyau minéral ;
(c) la prévision d'un réacteur agité pour recevoir lesdits réactifs ;
(d) l'introduction dans ledit réacteur d'une quantité suffisante de réactifs nécessaires pour former ledit pigment actif pour papier, de façon à former au moins une partie dudit pigment actif pour papier ;
(e) l'introduction de ladite bouillie de noyau minéral ;
(f) la poursuite de l'introduction simultanée de la partie principale desdits réactifs de pigment actif pour papier et de ladite bouillie aqueuse dudit noyau minéral dans des conditions de réaction alcaline à des températures comprises entre 40 et 100 °C jusqu'à ce que tous les réactifs aient été ajoutés au mélange ; et
(g) la récupération du produit composite solide.

**2.** Produit composite comprenant un noyau minéral inerte encapsulé dans un revêtement uniforme continu d'un pigment actif pour papier, dans lequel le noyau minéral est choisi dans le groupe comprenant les kaolins, les argiles lessivées, les talcs, les micas, la serpentinite, les montmorillonites, l'alumine hydratée, le carbonate de calcium, le carbonate de magnésium, la chaux broyée, la terre de diatomées, et leurs mélanges ; le revêtement étant formé d'un revêtement uniforme continu de particules séparées d'un pigment actif pour papier choisi dans le groupe comprenant les silicates de métaux alcalins synthétiques, les aluminosilicates de métaux alcalins, les silicates de métaux alcalino-terreux, les aluminosilicates de métaux alcalino-terreux, les silices précipitées, les aluminocarbonates de métaux alcalino-terreux et leurs mélanges, le produit composite pouvant être obtenu par :
(a) la formation d'un milieu aqueux contenant les réactifs nécessaires pour former ledit pigment actif pour papier ;
(b) la formation d'une bouillie aqueuse dudit noyau minéral ;
(c) la prévision d'un réacteur agité pour recevoir lesdits réactifs ;
(d) l'introduction dans ledit réacteur d'une quantité suffisante de réactifs nécessaires pour former ledit pigment actif pour papier, de façon à former au moins une partie dudit pigment actif pour papier ;
(e) l'introduction de ladite bouillie de noyau minéral ;
(f) la poursuite de l'introduction simultanée de la partie principale desdits réactifs de pigment actif pour papier et de ladite bouillie aqueuse dudit noyau minéral dans des conditions de réaction alcaline à des températures comprises entre 40 et 100 °C jusqu'à ce que tous les réactifs aient été ajoutés au mélange ; et
(g) la récupération du produit composite solide.

**3.** Produit composite selon la revendication 1, dans lequel au moins 80 % du noyau est revêtu du pigment pour papier.

**4.** Produit composite selon la revendication 1 ou 2, dans lequel le revêtement de pigment pour papier a une épaisseur d'nu moins 0,3 µm.

**5.** Produit composite selon la revendication 2, dans lequel au moins 80 % du noyau est encapsulé par ledit pigment pour papier.

**6.** Produit composite selon la revendication 1, dans lequel le noyau minéral est une argile de kaolin et le revêtement continu est constitué d'un aluminosilicate de sodium et de magnésium.

**7.** Produit composite selon la revendication 1, dans lequel le noyau est en kaolinite et en ce que le revêtement est en aluminosilicate de métal alcalin et de magnésium.

**8.** Produit composite selon la revendication 2, dans lequel le noyau minéral est une argile de kaolin et en ce que le revêtement continu comprend un aluminosilicate de sodium et de magnésium.

**9.** Produit composite selon la revendication 2, dans lequel le noyau est en kaolinite et le revêtement est en un aluminosilicate de métal alcalin et de magnésium.

**10.** Procédé de préparation d'un produit composite selon l'une des revendications 1 à 7, ledit procédé comprenant les étapes suivantes :

(a) la formation d'un milieu aqueux contenant les réactifs nécessaires pour former ledit pigment actif pour papier ;
(b) la formation d'une bouillie aqueuse dudit noyau minéral ;
(c) la prévision d'un réacteur agité pour recevoir lesdits réactifs ;
(d) l'introduction dans ledit réacteur d'une quantité suffisante de réactifs nécessaires pour former ledit pigment actif pour papier, de façon à former au moins une partie dudit pigment actif pour papier ;
(e) l'introduction de ladite bouillie de noyau minéral ;
(f) la poursuite de l'introduction simultanée de la partie principale desdits réactifs de pigment actif pour papier et de ladite bouillie aqueuse dudit noyau minéral dans des conditions de réaction alcaline à des températures comprises entre 40 et 100 ° C jusqu'à ce que tous les réactifs aient été ajoutés au mélange ; et
(g) la récupération du produit composite solide.

**11.** Procédé de préparation d'un produit composite selon la revendication 8, qui comprend les étapes suivantes :

(a) la formation de solutions aqueuses de silicate de sodium et de sulfate d'aluminium ;
(b) la formation de bouillies aqueuses d'hydroxyde de magnésium et d'argile de kaolin ;
(c) l'introduction dans un réacteur agité d'au moins une partie de ladite solution de sulfate d'aluminium et de ladite bouillie d'hydroxyde de magnésium ;
(d) le commencement de l'addition de ladite solution de silicate de sodium en une quantité suffisante pour former au moins un aluminosilicate de sodium et de magnésium ;
(e) l'addition de ladite bouillie de kaolin ;
(f) la poursuite de l'addition simultanée de tous les réactifs jusqu'à ce que chaque réactif ait été introduit dans ledit réacteur agité, l'introduction des réactifs dans le réacteur étant mise en oeuvre dans des conditions de température comprise entre 40 et 100 ° C et de pH alcalin ;
(g) la poursuite de l'addition de la solution de silicate de sodium jusqu'a ce qu'un pH final de 8,0 à 10,0 soit obtenu ; et
(h) la récupération du produit composite solide formé.

**12.** Procédé pour la préparation d'un produit composite selon la revendication 9, qui comprend les étapes suivantes :

(a) la formation de solutions aqueuses de silicate de métal alcalin et de sulfate d'aluminium ;
(b) la formation de bouillies aqueuses d'hydroxyde de magnésium et d'argile de kaolin ;
(c) l'introduction dans un réacteur agité d'au moins une partie de ladite solution de sulfate d'aluminium et de ladite bouillie d'hydroxyde de magnésium ;
(d) le commencement de l'addition de ladite solution de silicate de métal alcalin en une quantité suffisante pour former au moins un aluminosilicate de métal alcalin et de magnésium ;
(e) l'addition de ladite bouillie de kaolin ;
(f) la poursuite de l'addition simultanée de tous les réactifs jusqu'à ce que chaque réactif ait été introduit dans ledit réacteur agité, l'introduction des réactifs dons le réacteur étant mise en oeuvre dans des conditions de température comprise entre 40 et 100 ° C et de pH alcalin ;
(g) la poursuite de l'addition de la solution de silicate de métal alcalin jusqu'à ce qu'un pH final de 8,0 à 10,0 soit obtenu ; et
(h) la récupération du produit composite solide formé.

**13.** Procédé selon la revendication 11, dans lequel le produit composite solide cet récupéré par filtration et en ce qu'il est broyé à la granulométrie voulue.

**14.** Procédé selon la revendication 13, dans lequel le produit broyé est ensuite séché par atomisation pour former un produit.

**15.** Utilisation des produits composites selon l'une des revendications 1 à 9 comme pigment pour papier, pigment de revêtement et charge.

FIG. 1

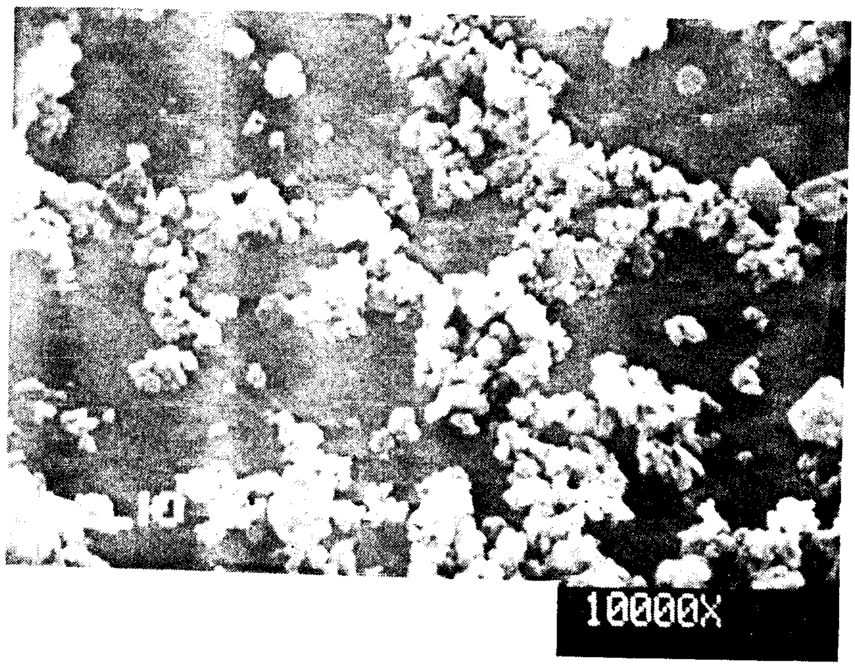


FIG. 2

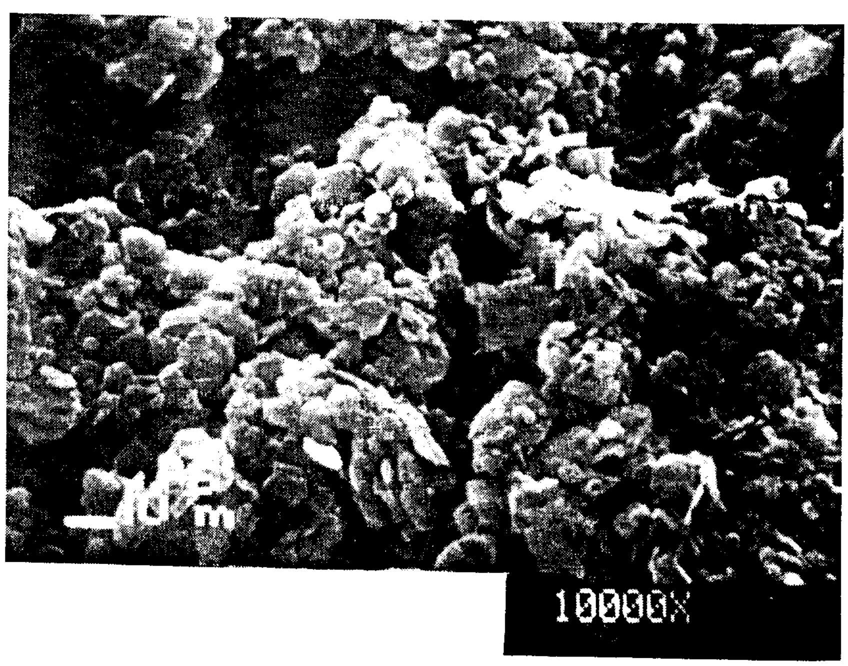

FIG. 3

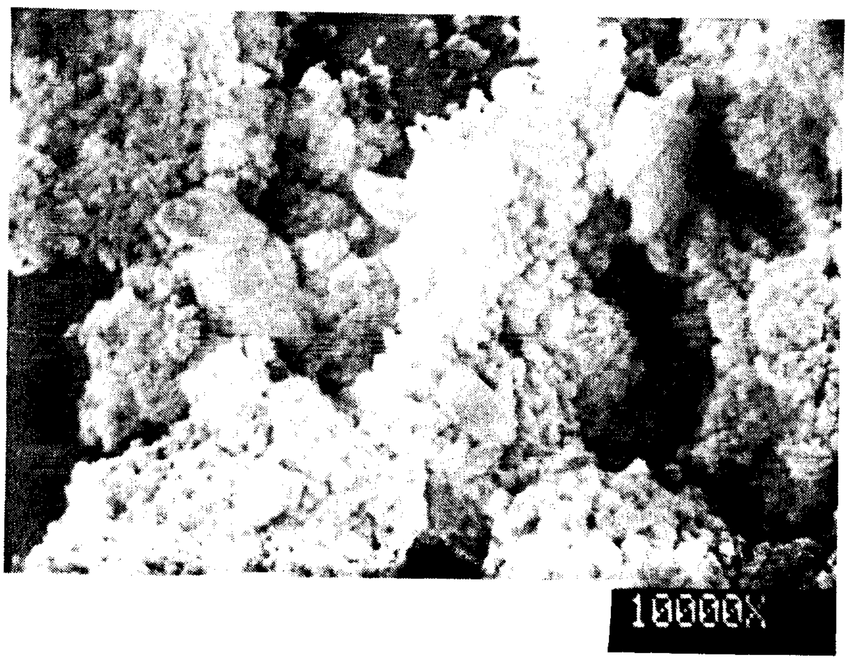

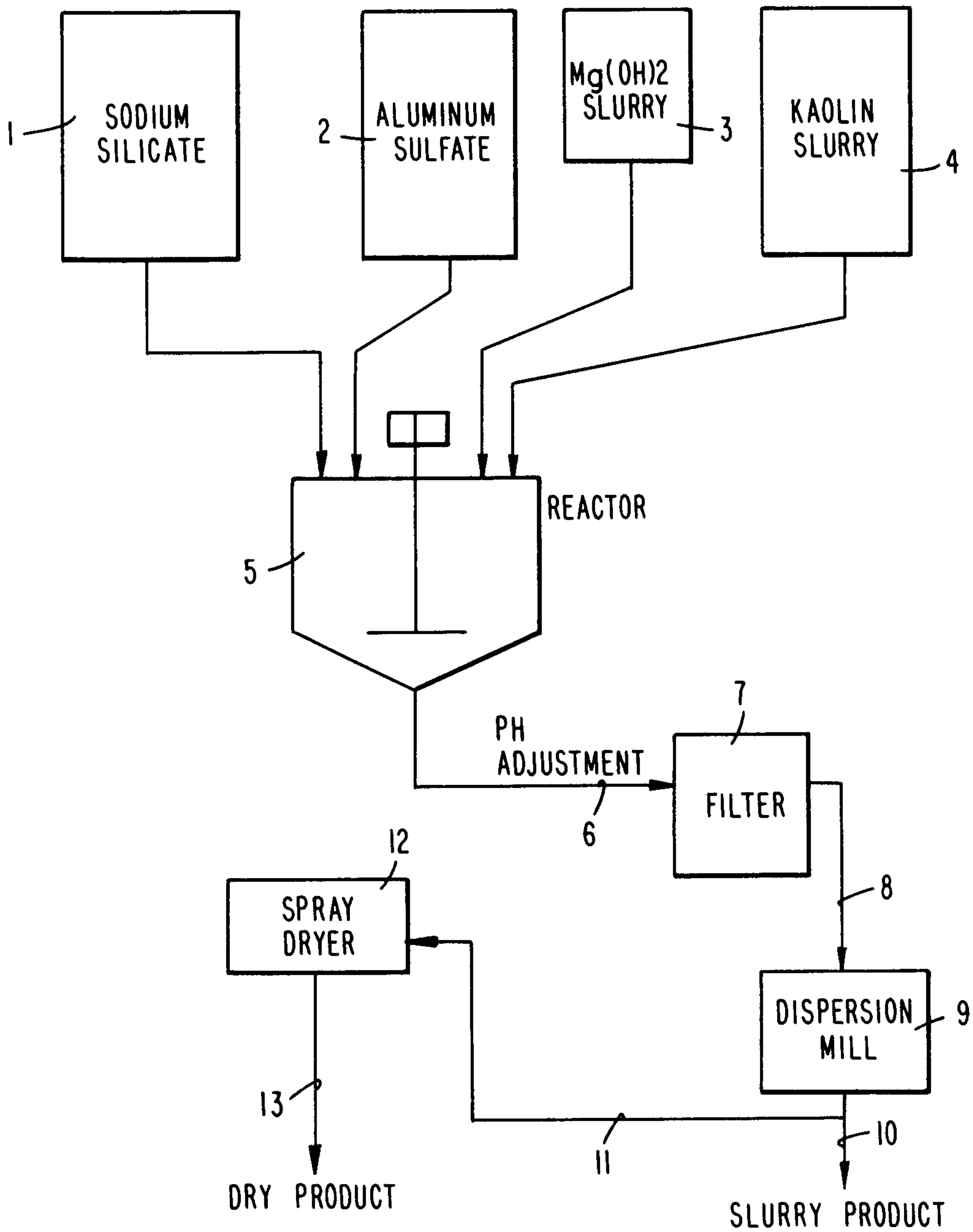
SODIUM SILICATE
1
ALUMINUM SULFATE
2
Mg(OH)2 SLURRY
3
KAOLIN SLURRY
4
REACTOR
5
PH ADJUSTMENT
6
FILTER
7
8
DISPERSION MILL
9
10
SLURRY PRODUCT
11
SPRAY DRYER
12
13
DRY PRODUCT

FIG. 4

FIG. 5A

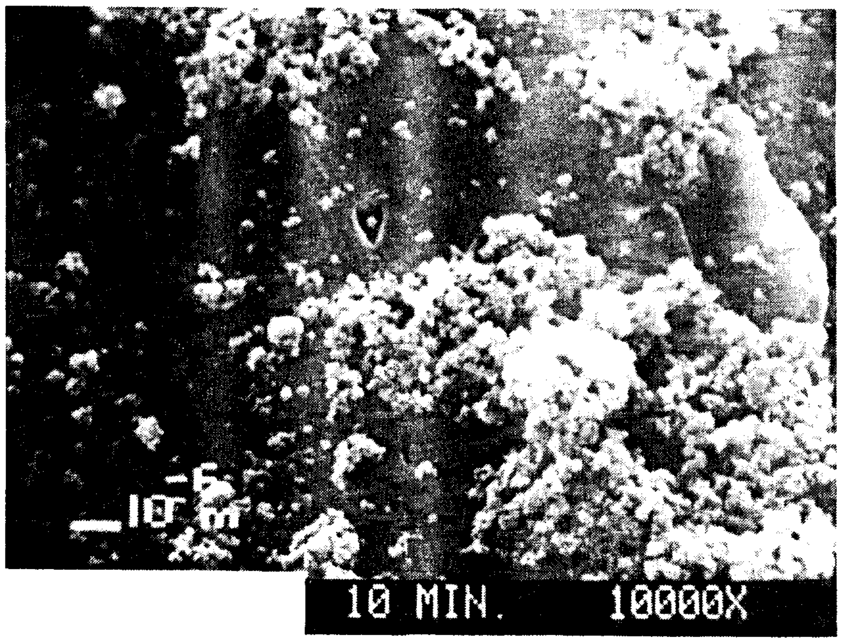


FIG. 5B

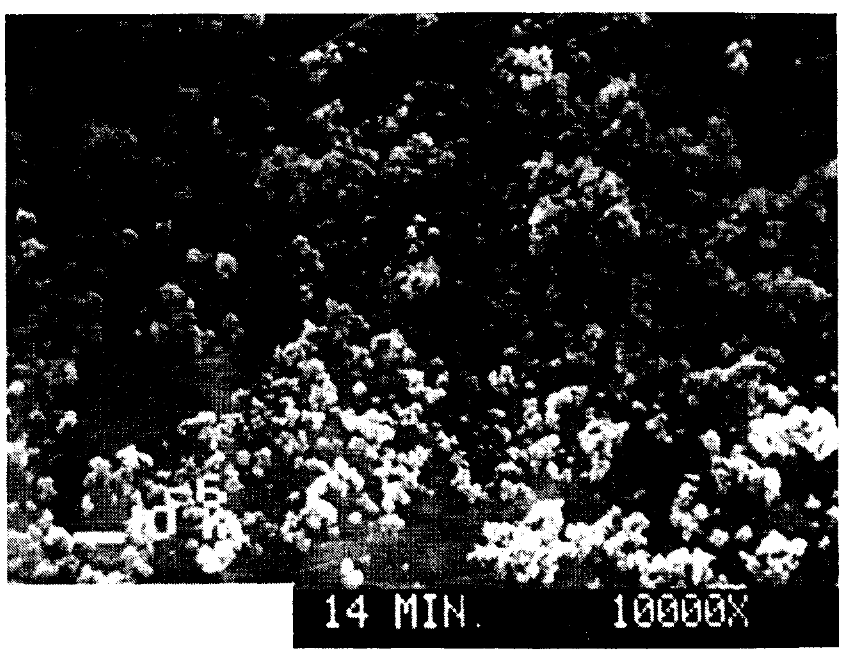

FIG. 5C

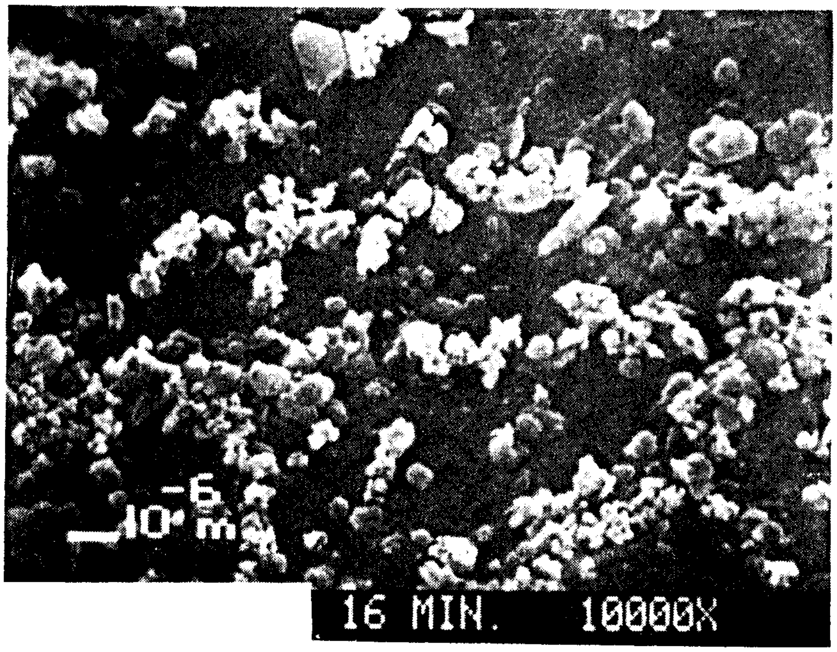


FIG. 5D

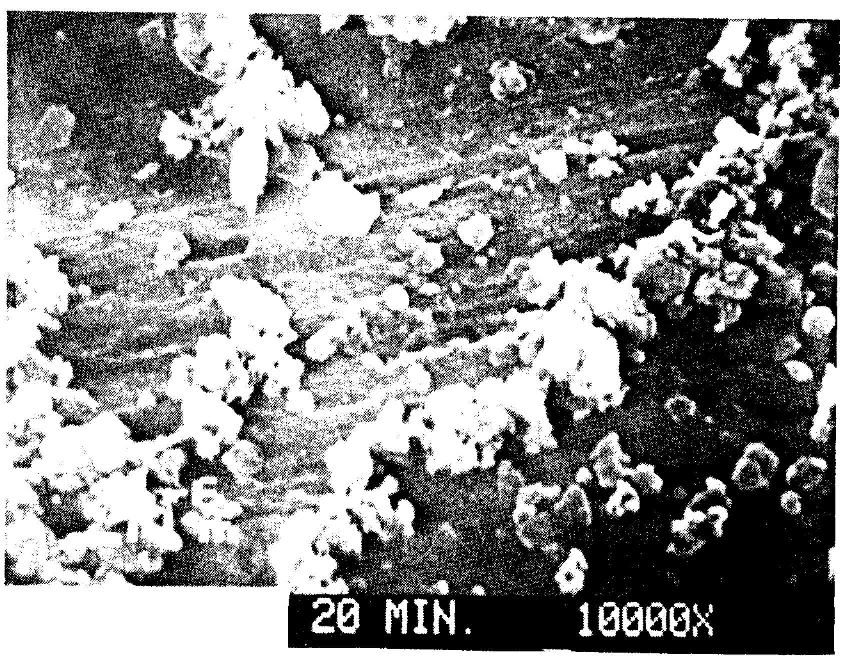

FIG. 5E

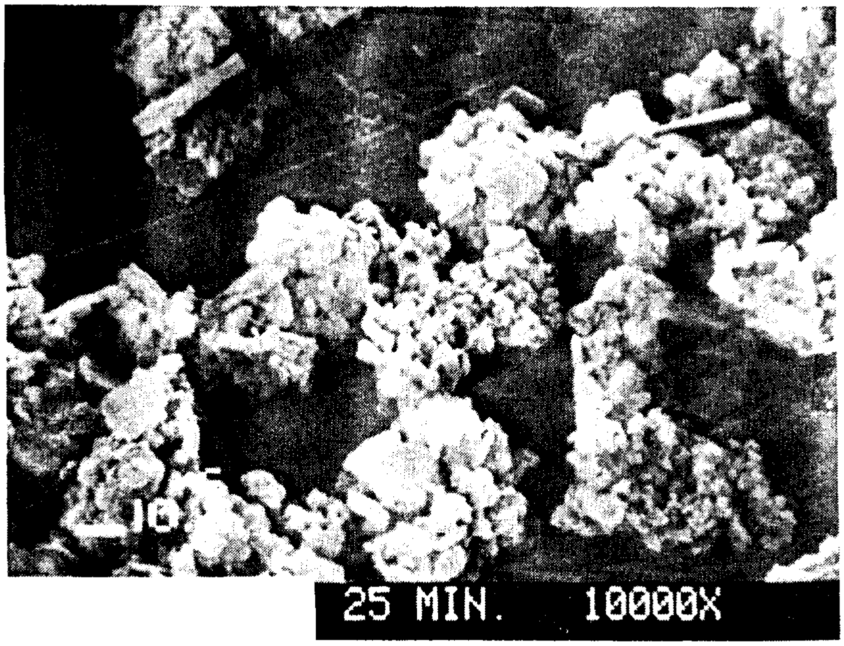


FIG. 5F

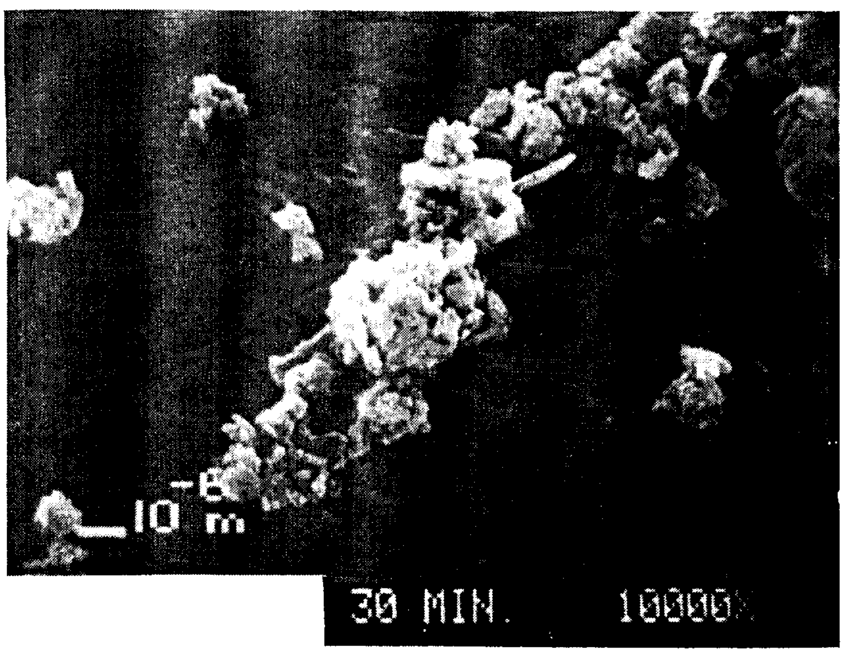

FIG. 5G

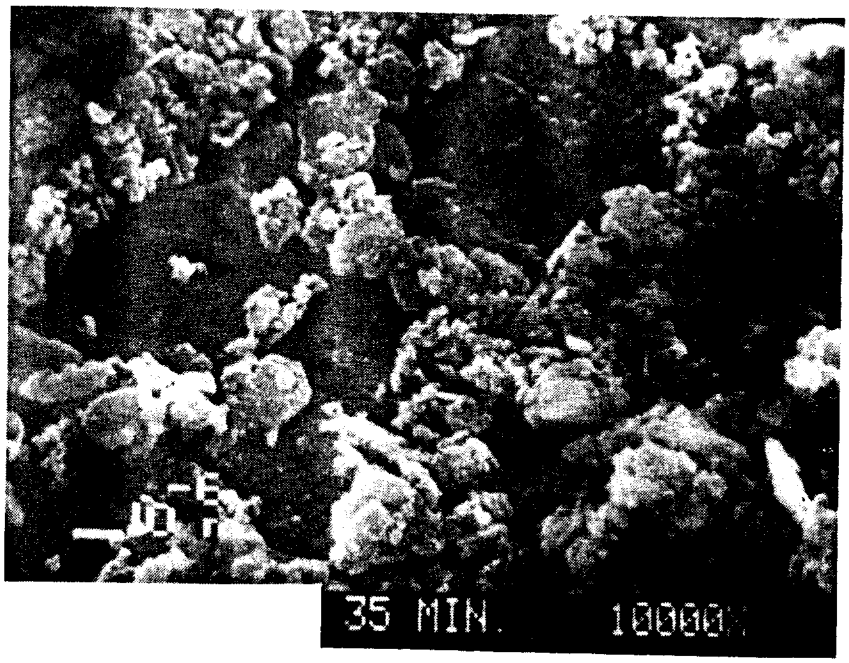


FIG. 5H

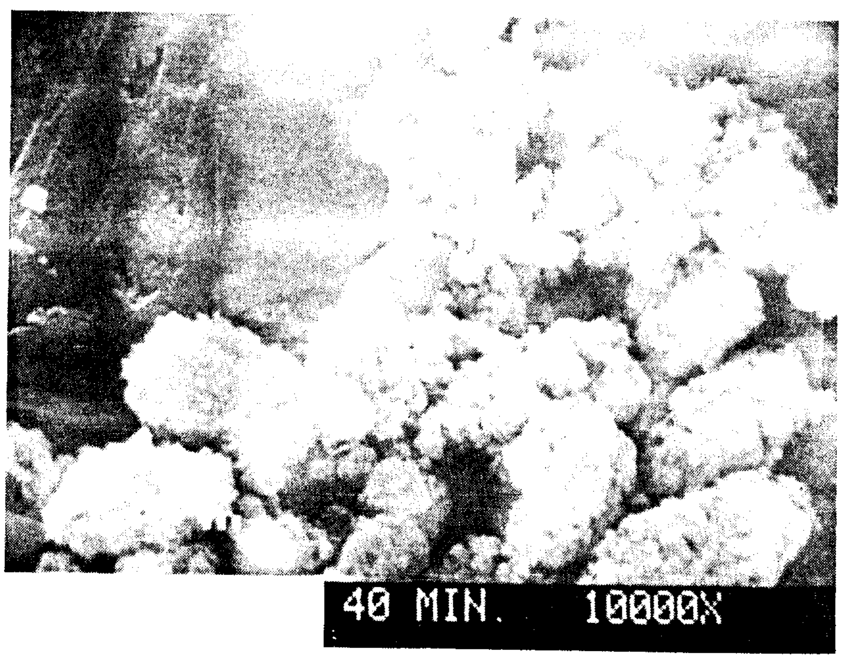

FIG. 5 I

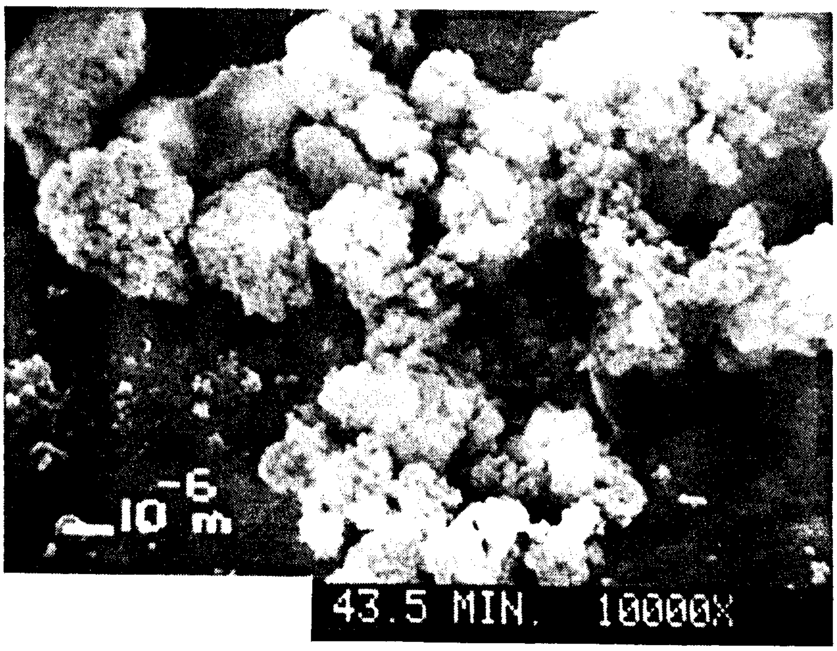

FIG. 6A

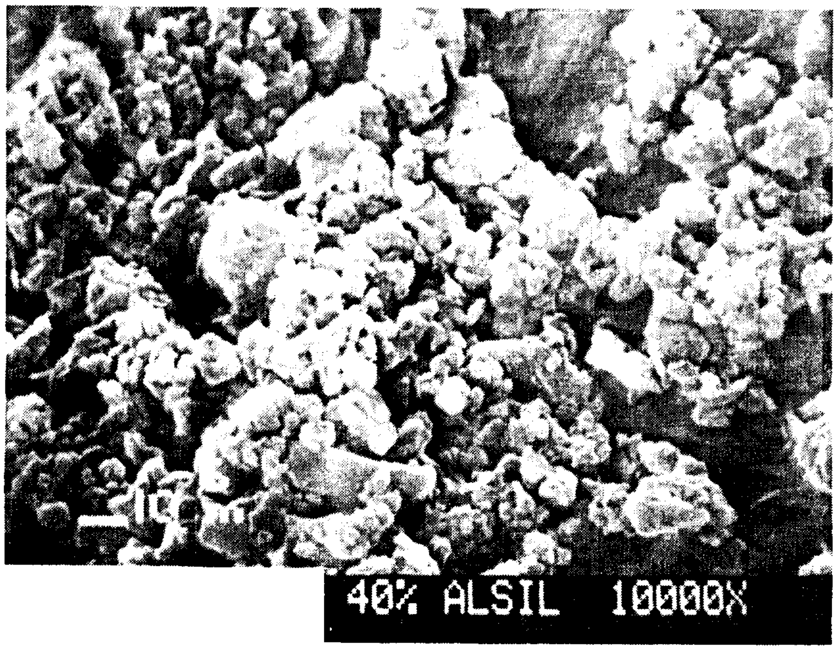


FIG. 6B

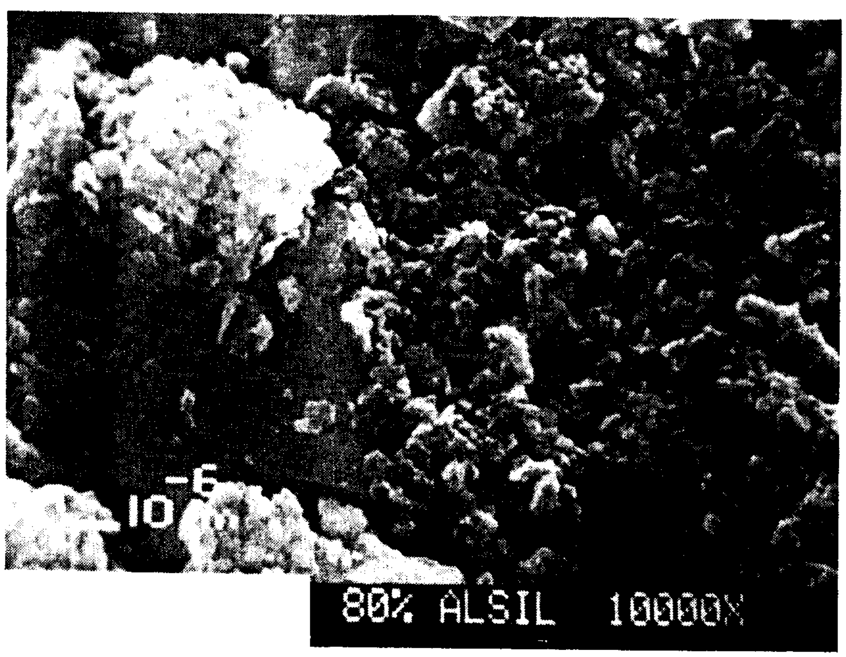

FIG. 6C

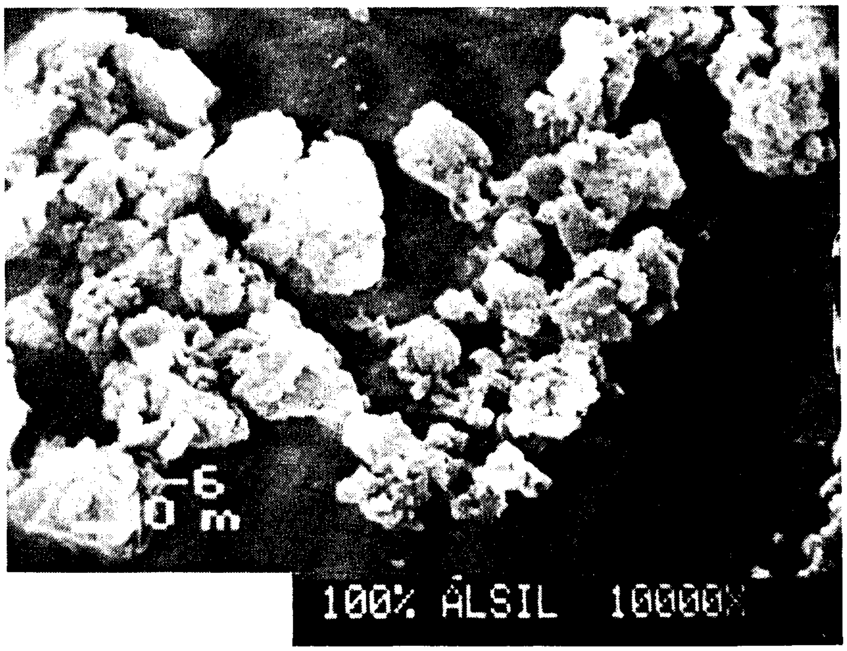


FIG. 7A

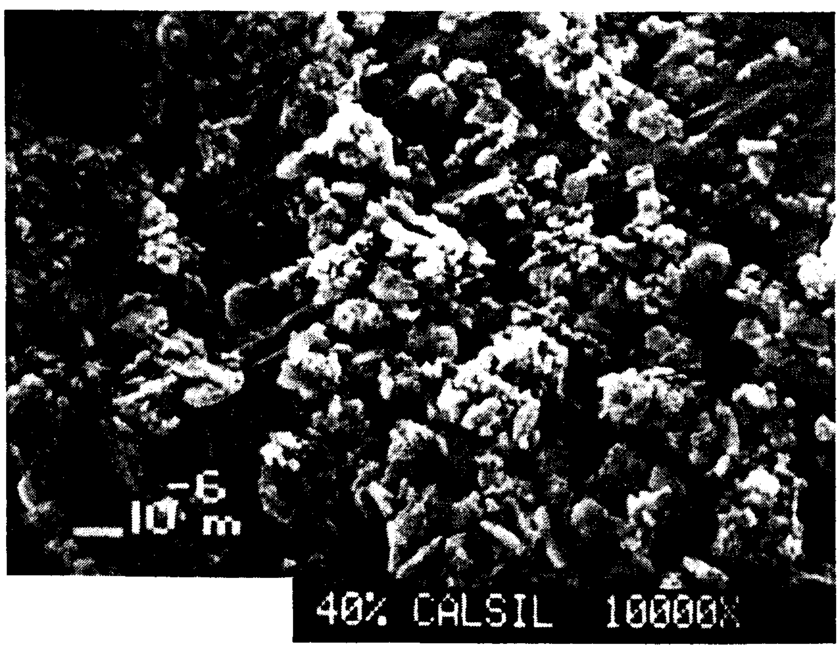

FIG. 7B

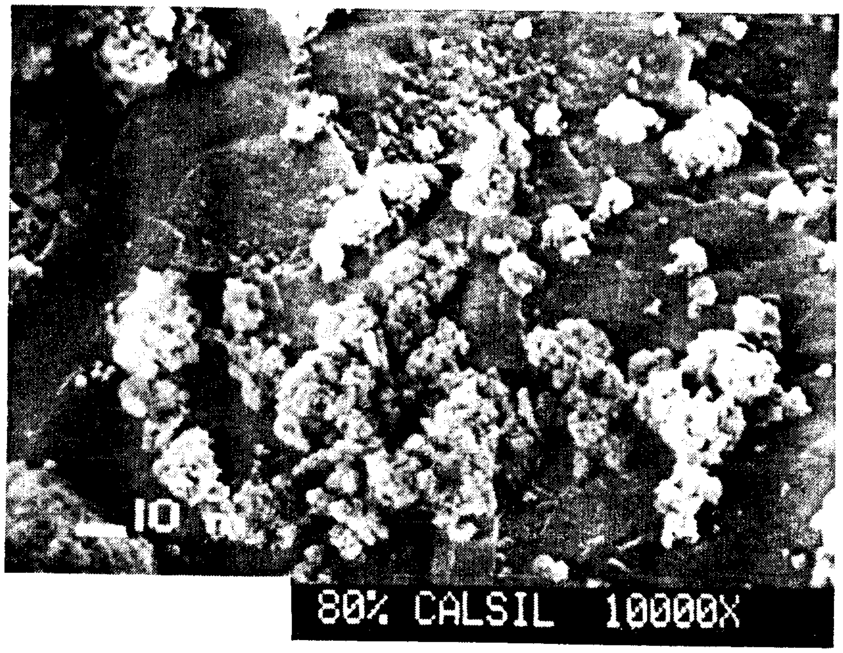


FIG. 7C

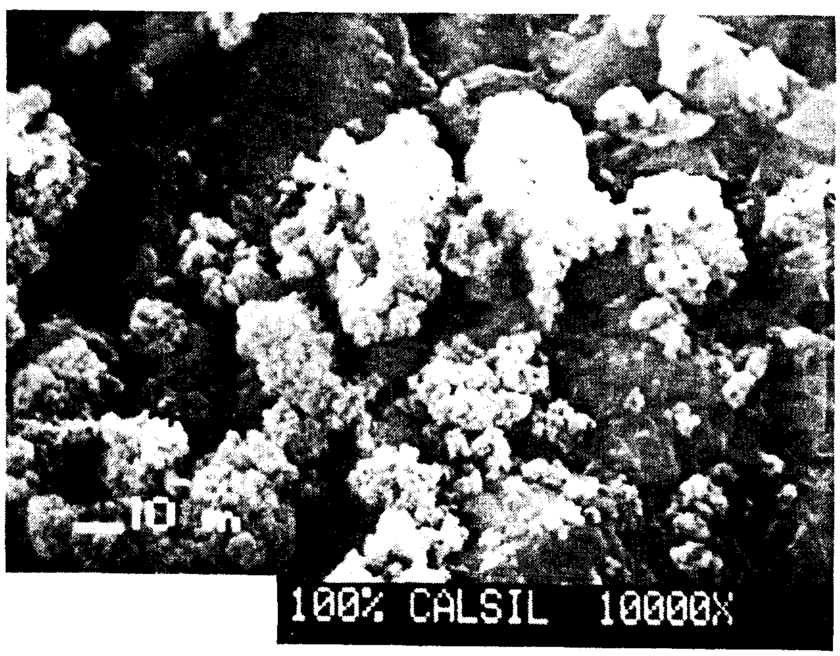

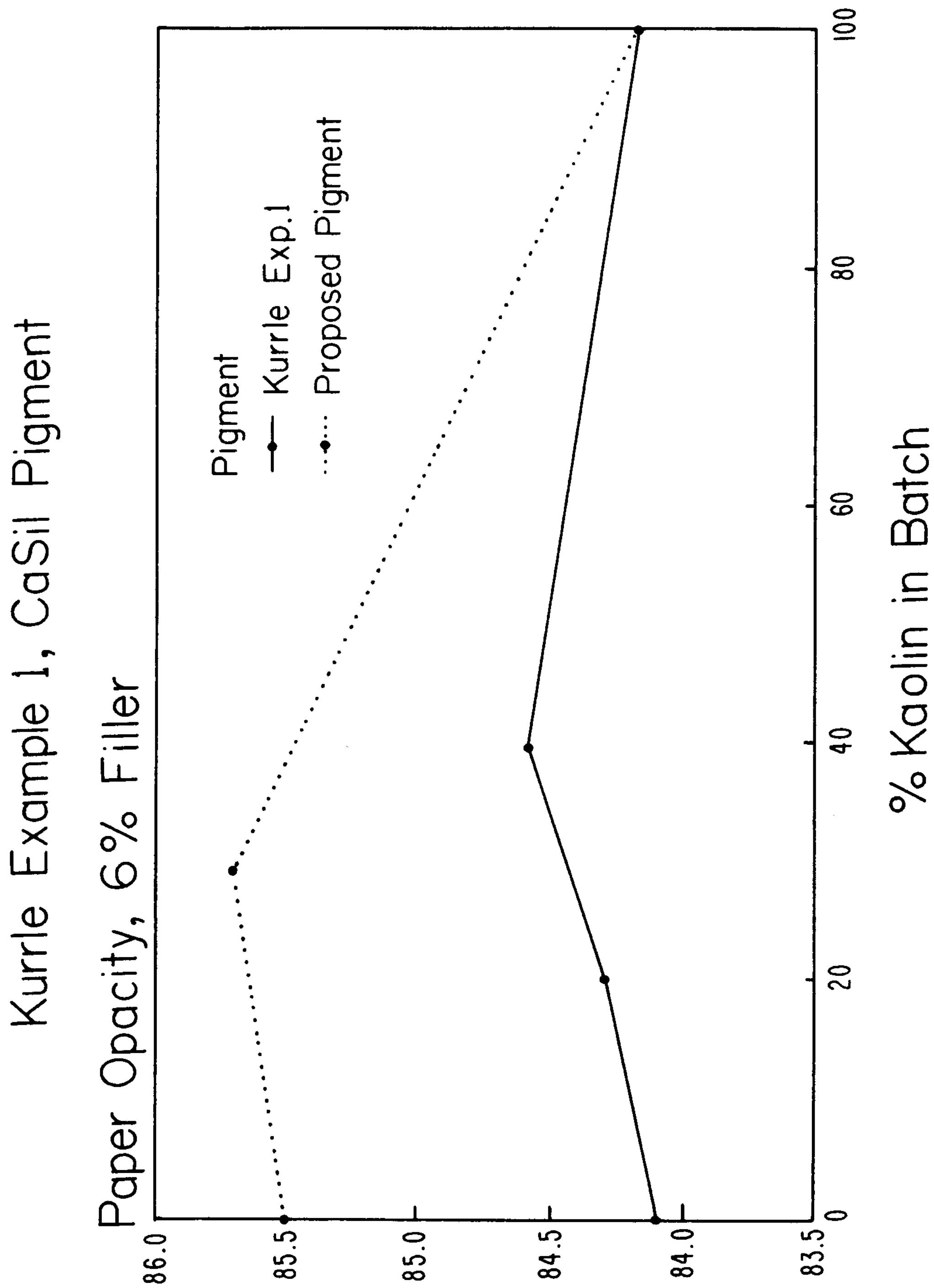
Kurrle Example 1, CaSil Pigment
Paper Opacity, 6% Filler
Pigment
Kurrle Exp.1
Proposed Pigment
86.0
85.5
85.0
84.5
84.0
83.5
0
20
40
60
80
100
% Kaolin in Batch

FIG. 8

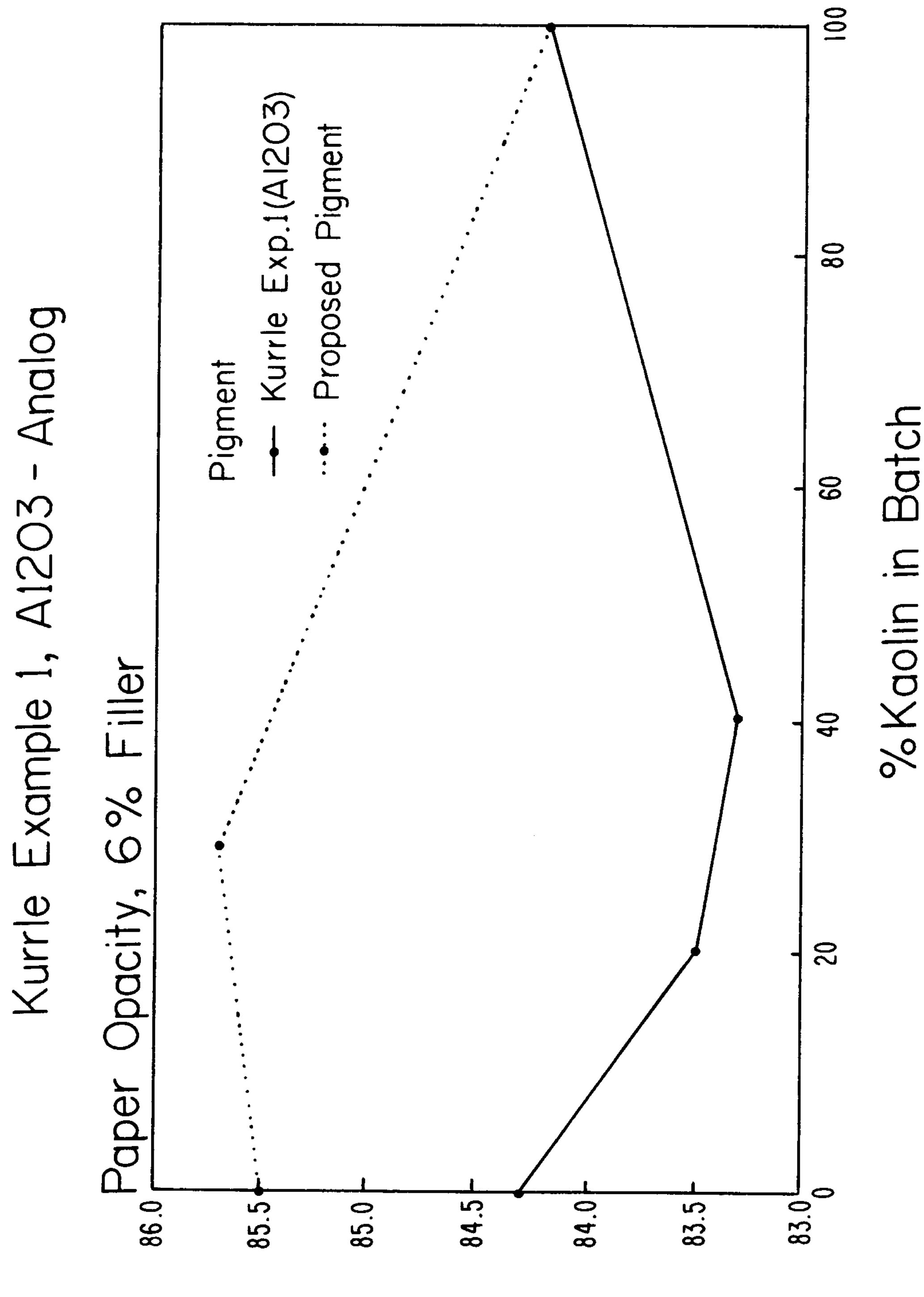
Kurrle Example 1, Al2O3 - Analog
Paper Opacity, 6% Filler
Pigment
Kurrle Exp.1(Al2O3)
Proposed Pigment
86.0
85.5
85.0
84.5
84.0
83.5
83.0
0
20
40
60
80
100
%Kaolin in Batch

FIG.9